# EUROPÄISCHE PATENTSCHRIFT

(11) **EP 0 442 270 B1**
(45) Veröffentlichungstag und Bekanntmachung des Hinweises auf die Patenterteilung: **08.05.1996**
(21) Anmeldenummer: 91100443.0
(22) Anmeldetag: 16.01.1991
(51) Int. Cl.: B60S 1/02

(54) **Verfahren zum Betreiben einer Scheibenwisch- und -reinigungseinrichtung für ein Fahrzeug sowie Einrichtung zur Dürchführung des Verfahrens**
Procedure for operating a vehicle window wiping and cleaning arrangement as well as an arrangement for executing the procedure
Procédé pour exploiter une installation d'essuyage et de nettoyage de vitres pour un véhicule ainsi qu'une installation pour exécuter ce procédé

(30) Priorität: 13.02.1990 DE 4004375; 29.06.1990 DE 4020644
(43) Veröffentlichungstag der Anmeldung: 21.08.1991
(73) Patentinhaber: Petermann, Günther, D-48653 Coesfeld (DE)
(72) Erfinder: Petermann, Günther, D-48653 Coesfeld (DE)
(74) Vertreter: Schulze Horn, Stefan, Dipl.-Ing. M.Sc.

(56) Entgegenhaltungen:
- EP-A- 0 263 007
- DE-A- 2 427 644
- DE-C- 3 504 549
- GB-A- 2 205 485

## Beschreibung

Die Erfindung betrifft ein Verfahren nach dem Oberbegriff des Patentanspruches 1 sowie eine Einrichtung zur Durchführung des Verfahrens.

Aus dem Dokument DE-C-35 04 549 ist ein Verfahren mit den im Oberbegriff des Patentanspruches 1 angegebenen Merkmalen bekannt. Mit einem Verfahren nach diesem bekannten Stand der Technik ist zwar ein gegenüber herkömmlichen Verfahren verbessertes Wischergebnis zu erreichen, jedoch ist die erreichte Verbesserung unter gewissen ungünstigen Betriebsbedingungen noch nicht zufriedenstellend.

Weiterhin ist in dem Dokument EP-A-0 263 007 eine Wischvorrichtung beschreiben, bei welcher die Achse, um welche der Scheibenwischerarm verschwenkbar ist, in ihrer Axialrichtung verschiebbar ist. Dabei sind in ausgeschobenem Zustand der Achse die Wischlippen von der Scheibe abgehoben und befinden sich in einem gewissen Abstand von der Scheibe parallel zu dieser. In zurückgezogenem Zustand der Achse liegt dann der Scheibenwischer mit seinen Wischlippen wie üblich auf der Scheibe auf.

Als nachteilig bei diesem bekannten Stand der Technik wird angesehen, daß der mechanische Aufwand für das Verschieben der Achse des Scheibenwischers relativ hoch ist und daß eine derartige Vorrichtung störungsanfällig und damit unzuverlässig ist. Zudem ist es in der Praxis kaum möglich, die Wischlippen im angehobenen Zustand des Scheibenwischers exakt und in geringem Abstand parallel zur Scheibe zu halten, insbesondere bei mit höherer Geschwindigkeit fahrendem Fahrzeug. Dadurch kommt es zu einer ungleichmäßigen Zuführung von Reinigungsflüssigkeit oder warmer Luft, die bei der Wischvorrichtung gemäß diesem Stand der Technik zur Reinigung und zum Enteisen der Fahrzeugscheibe in den Zwischenraum zwischen zwei Wischlippen des Scheibenwischers geleitet wird.

Es stellt sich daher die Aufgabe, ein Verfahren zum Betreiben einer Scheibenwisch- und -reinigungseinrichtung der eingangs genannten Art anzugeben, mit welchem eine bestmögliche Funktion der Einrichtung auch unter ungünstigen Betriebsbedingungen gewährleistet wird, wobei hier insbesondere hartnäckige Verschmutzungen der Scheibe, extrem starke Luftströmungen bei hohen Fahrzeuggeschwindigkeiten, Außentemperaturen um und unter 0°C sowie ähnliche ungünstige äußere Einflüsse gemeint sind. Außerdem soll eine speziell für die Durchführung des Verfahrens geeignete, weiterentwickelte Scheibenwisch- und -reinigungseinrichtung angegeben werden.

Die Lösung des ersten Teils dieser Aufgabe gelingt erfindungsgemäß durch ein Verfahren der eingangs genannten Art mit den kennzeichnenden Merkmalen des Patentanspruches 1.

Mit dem neuen Verfahren wird erreicht, daß vor dem eigentlichen mechanischen Wischvorgang eine chemische Vorbehandlung der Scheibenverschmutzung erfolgt, die das nachfolgende Sauberwischen der Scheibe mittels der Wischlippen wesentlich erleichtert oder sogar erst möglich macht. Dabei wird hier gezielt der Luftkisseneffekt dazu benutzt, die Wischlippen gleichmäßig über deren gesamte Länge von der Scheibe abzuheben, um zunächst die Scheibe mit dem Scheibenverschmutzungen lösende oder anlösende Lösungsmittel enthaltenden Fluid zu benetzen. Erst nach dieser mit abgehobenen Wischlippen erfolgten Benetzung und dadurch erreichter Anlösung der Verschmutzungen beginnt das Wischen der Scheibe. Hierzu genügt es, die Fluidzufuhr aufzuheben oder soweit zu reduzieren, daß der Luftkisseneffekt nicht mehr auftritt, wodurch die Wischlippen wieder in Anlage an die Scheibe gelangen. Außerdem wird die Standzeit der Wischlippen hierdurch wesentlich verlängert, da deren mechanische Belastung durch Schmutzpartikel nur noch gering ist. Der Begriff "Fluid" soll dabei als zusammenfassender Begriff für Flüssigkeiten, Gase, Dämpfe und Mischungen aus diesem verstanden werden, da je nach Art des verwendeten Lösungsmittels der eine oder der andere Aggregatzustand oder ein gemischter Zustand günstiger sein kann.

Bevorzugt ist vorgesehen, daß das Fluid ein Luft-Lösungsmittel-Gemisch ist und daß das Lösungsmittel in teils flüssigem, teils gasförmigen Zustand in den Hohlraum eingeleitet wird. Vorteilhaft ist dabei der flüssige Teil des Lösungsmittels in Form feiner Tröpfchen in dem Gas-Luft-Gemisch verteilt, wodurch eine gleichmäßige Benetzung der Scheibe und der darauf sitzenden Verschmutzungen erreicht wird, ohne daß eine zusätzliche Sichtbeeinträchtigung des Fahrzeugführers hierdurch verursacht würde.

Eine weitere Ausgestaltung des Verfahrens sieht vor, daß das Lösungsmittel als Flüssigkeit in einem im Fahrzeug angeordneten Vorratsbehälter vorgehalten und bei Bedarf in eine zum Hohlraum im Scheibenwischer führende Fluidleitung dosiert eingeleitet wird. Der Lösungsmittelvorrat erfordert so innerhalb des Fahrzeuges nur wenig Raum. Außerdem kann das Lösungsmittel, je nach den aktuellen Erfordernissen, sowohl unmittelbar in flüssiger Form als auch durch nachträgliche Vernebelung oder Verdampfung in einer gewünschten anderen Form sowie geeigneten Menge zum Scheibenwischer und auf die Scheibe gebracht werden.

Zur Bereitstellung der vorzugsweise einen Teil des Fluides bildenden Luft ist vorgesehen, daß in die zum Hohlraum im Scheibenwischer führende Fluidleitung bei Bedarf Druckluft aus einem Luftvorratsbehälter und/oder Kompressor dosiert eingeleitet wird. Hierdurch können Fluiddruck und -menge auf einfache Weise und zuverlässig entsprechend den jeweiligen Erfordernissen eingestellt bzw. verändert werden.

Um das Einbringen des Lösungsmittels in die Fluidleitung möglichst einfach und mit geringem Aufwand durchführen zu können, ist vorgesehen, daß das Lösungsmittel mittels eines in einem Mischabschnitt der Fluidleitung durch Düsenwirkung erzeugten Unterdrucks aus dem Vorratsbehälter in den die Fluidleitung durchströmenden Luftstrom eingeführt und darin vernebelt wird.

Um die Reinigungswirkung zu verbessern und eine zuverlässige Funktion auch bei niedrigen Außentemperaturen sicherzustellen, ist vorgesehen, daß bei Bedarf das durch die Fluidleitung strömende Fluid geregelt erwärmt wird.

Ein besonders geeignetes Lösungsmittel für den zuvor beschriebenen Verwendungszweck im Rahmen des erfindungsgemäßen Verfahrens ist Ethanol. Ethanol hat günstige Lösungseigenschaften im Hinblick auf an Fahrzeugscheiben üblicherweise auftretenden Verschmutzungen, ist ungiftig und umweltverträglich und ohne besondere Maßnahmen lagerbar und handhabbar.

Eine weitere Ausgestaltung des Verfahrens nach dem Patentanspruch 1 ist dadurch gekennzeichnet, daß in dem Hohlraum im Scheibenwischer nach der Anlaufphase des Scheibenwischers ein Unterdruck erzeugt wird. Dieser Unterdruck kann zum einen dazu genutzt werden, innerhalb des Hohlraums im Scheibenwischer anfallende Schmutzpartikel mit sich führende Fluidmengen abzuziehen und zum anderen eine verstärkte Anpressung des Scheibenwischers an die Scheibe zu erreichen. In letzterem Zusammenhang ist weiter vorgesehen, daß, da bei niedrigen Fahrgeschwindigkeiten des Fahrzeuges eine verstärkte Anpressung im allgemeinen noch nicht erforderlich ist, der Unterdruck in Abhängigkeit von der Fahrgeschwindigkeit des Fahrzeuges geregelt wird und daß, in weiterer Ausgestaltung, erst bei Überschreiten eines Fahrgeschwindigkeits-Grenzwertes der Hohlraum unter Unterdruck gesetzt wird. Hierdurch wird die Anwendung des Unterdrucks innerhalb des Hohlraumes im Scheibenwischer auf solche Fälle beschränkt, in denen ein solcher Unterdruck für eine sichere Anlage des Scheibenwischers an der Scheibe sinnvoll und erforderlich ist.

Eine weitere Ausgestaltung des Verfahrens nach dem Patentanspruch 1 sieht vor, daß bei Unterschreiten Unterschreiten eines Außentemperatur-Grenzwertes der Scheibenwischer bzw. das Scheibenwischerblatt mittels eines durch darin vorgesehene Kanäle und/oder Spalträume geleiteten erwärmten Fluids auf eine über der Außentemperatur, insbesondere über 0°C liegende Temperatur erwärmt wird. Durch diese Erwärmung wird eine ausreichende mechanische Beweglichkeit und Anpassungsfähigkeit der einzelnen Teile des Scheibenwischers auch unter ungünstigen äußeren Bedingungen, insbesondere bei Temperaturen um oder unter 0°C in Verbindung mit Niederschlägen, gewährleistet, da es nicht zu einem Anfrieren von Niederschlag und damit einem zunehmenden Blockieren der mechanischen Beweglichkeit des Scheibenwischers und seiner einzelnen Teile kommen kann.

Um einerseits den Luftkisseneffekt und andererseits die Erwärmung des Scheibenwischers möglichst einfach und insbesondere mit nur einer einzigen zum Scheibenwischer führenden Fluidleitung erreichen zu können, ist vorgesehen, daß zur Erzeugung des Luftkisseneffektes das Fluid mit einem Druck zwischen 1 und 2 bar und zur Erwärmung des Scheibenwischers bzw. Scheibenwischerblattes mit einem Druck zwischen 0,4 und 0,6 bar zugeführt wird. Durch den geringen Druck zwischen 0,4 und 0,6 bar bei der Zuführung des Fluides für die Erwärmung des Scheibenwischers wird sichergestellt, daß ein Luftkisseneffekt noch nicht auftreten kann, wodurch die sichere Anlage der Wischlippen an der Scheibe gewährleistet bleibt. Erst bei einer deutlichen Erhöhung des Fluiddruckes auf einen Wert zwischen 1 und 2 bar kommt es zu dem Luftkisseneffekt, der nur kurzzeitig zu Beginn eines Arbeitszyklus des Scheibenwischers benötigt wird.

Um die Erwärmung des Scheibenwischers möglichst effektiv zu machen und nicht nur auf eine von innen vom Hohlraum aus erfolgende Erwärmung zu beschränken, ist vorgesehen, daß durch eine vorbelastete Ventilanordnung innerhalb des Scheibenwischers das Fluid abhängig vom anstehenden Druck selbsttätig entweder zur Erzeugung des Luftkisseneffektes in den Hohlraum über der Scheibe oder zur Scheibenwischer-Anwärmung in die dafür vorgesehenen Kanäle und Spalträume geleitet wird. Die Schaltrichtung und Vorbelastung der Ventilanordnung ist dabei logischerweise so gestaltet, daß bei dem zuvor erwähnten geringen Druck des Fluides, der für die Erwärmung des Scheibenwischers verwendet wird, die Ventilanordnung den Weg bzw. die Wege für das Fluid in die zur Scheibenwischer-Anwärmung vorgesehenen Kanäle und Spalträume freigibt, während bei dem erhöhten Druck für die Erzeugung des Luftkisseneffektes die Ventilanordnung eben durch diesen stoßweise auftretenden erhöhten Druck in eine Schließstellung überführt werden, die das Fluid nur in den Hohlraum über der Scheibe gelangen läßt, nicht jedoch in die Anwärm-Kanäle und -Spalträume.

Eine weitere Ausgestaltung des Verfahrens nach dem Oberbegriff des Anspruches 1 kennzeichnet sich dadurch, daß die Leistungsaufnahme des Scheibenwischer-Antriebsmotors erfaßt wird und daß bei einem infolge eines Trockenlaufens des Wischers eintretenden Überschreiten eines Leistungsaufnahme-Grenzwertes der Scheibenwischer in seine Ruhelage bewegt und der Antriebsmotor abgeschaltet wird. Hiermit wird erreicht, daß nach der Scheibenreinigung und -trocknung der Scheibenwischer selbstätig abgeschaltet wird, so daß ein unnötiger Scheibenwischerbetrieb und Wischerlippenverschleiß vermieden wird und der Fahrzeugführer entlastet wird.

Um die Beseitigung auch besonders hartnäckiger Verschmutzungen von der Scheibe zu erleichtern, sieht eine weitere Ausgestaltung des Verfahrens nach dem Oberbegriff des Patentanspruches 1 vor, daß bei Bedarf innerhalb des Scheibenwischers eine in den Hohlraum gerichtete, unter einem flachen, unterhalb des Winkels der Totalreflexion liegenden Winkel auf die Scheibe treffende Mikrowellenstrahlung erzeugt wird. Durch die Mikrowellenstrahlung werden auf der Scheibe haftende Verschmutzungen, insbesondere organische Substanzen, wie Insektenreste, wirksam gelockert und gelöst und können anschließend mechanisch durch die Wischlippen in Verbindung mit dem Lösungsmittel entfernt werden. Dabei kann keinerlei Mikrowellenstrahlung in das Innere des Fahrzeuges und in den Bereich der Insassen des Fahrzeuges gelangen, so daß gesundheitliche Bedenken hier nicht bestehen.

Für das Gesamtverfahren sieht die Erfindung weiterhin vor, daß die für das Betreiben der Scheibenwisch- und -reinigungseinrichtung relevanten Parameter, wie Stellung des Scheibenwischers und/oder Fluiddruck und/oder Fluidtemperatur und/oder Außentemperatur und/oder Antriebsmotor-Leistungsaufnahme, über geeignete Sensoren mittels einer elektronischen Steuereinheit erfaßt und überwacht werden und daß nach Maßgabe dieser Parameter sowie nach Maßgabe gespeicherter Daten- und Programminformationen und nach Eingabe eines Startimpulses die Funktionen der Scheibenwisch- und -reinigungseinrichtung einzeln oder in Kombination miteinander durch die Steuereinheit ausgelöst und überwacht werden. Hierdurch wird erreicht, daß in Abhängigkeit von den vorliegenden Betriebs-und Umgebungsbedingungen stets die optimale Funktion der Scheibenwisch- und -reinigungseinrichtung ausgewählt und aktiviert wird, was zu einer weitgehenden Unabhängigkeit der Einrichtung von den Entscheidungen des Fahrzeugführers und eventuellen Fehlern desselben führt.

Bevorzugt ist in diesem Zusammenhang vorgesehen, daß nur noch der Startimpuls manuell durch den Fahrzeugführer eingegeben wird und daß alle nachfolgenden Fuktionen selbsttätig ablaufen. Damit muß der Fahrzeugführer lediglich noch entscheiden, ob eine Scheibenreinigung bzw. ein Scheibenwischen grundsätzlich erforderlich ist. Bei einer positiven Beantwortung dieser Frage muß dann der Fahrzeugführer lediglich noch einen Startimpuls geben, woraufhin dann selbsttätig das für die aktuellen Umstände optimale Wisch- und Reinigungsprogramm abläuft.

Um die benötigten Funktionen überwachen und ausführen zu können, ist vorgesehen, daß als Steuereinheit ein eigener, unabhängiger Mikroprozessor oder ein im Fahrzeug ohnehin vorhandener Prozessor verwendet wird. Eine solche Steuereinheit ist sehr kompakt, funktionssicher und außerdem variabel, was ein wesentlicher Beitrag zu einer sicheren und kostengünstigen Durchführung des Verfahrens bzw. der einzelnen Verfahrensteile ist.

Hinsichtlich des Verfahrens ist schließlich in einer letzten Ausgestaltung noch vorgesehen, daß an den Wischlippen und der vom Wischer überstrichenen Scheibenoberfläche adhäsiv anhaftendes Wasser durch Zuführung eines wasserbindenden, flüchtigen Fluids, insbesondere Ethanol, in letzteres eingebunden und zusammen mit diesem beschleunigt verdunstet wird. Hiermit wird insbesondere erreicht, daß auch bei ungünstigen Wetterlagen mit einer sehr hohen Luftfeuchtigkeit, bei dem eine Wasserverdunstung von der Scheibe und von den Wischlippen nicht oder fast nicht stattfindet, das anhaftende Wasser wirksam entfernt werden kann, wodurch nachteilige Schlierenbildung auf der Scheibe, die häufig zu starken Sichtbeeinträchtigungen des Fahrzeugführers, insbesondere bei Nachtfahrten, führt, weitestgehend vermieden werden.

Zur Lösung des zweiten Teils der Aufgabenstellung, betreffend eine zur Durchführung des vorangehend erläuterten Verfahrens geeignete Scheibenwisch- und -reinigungseinrichtung nach dem Oberbegriff des Patentanspruches 20, wird ein Scheibenwischer als Teil der Einrichtung vorgeschlagen, dessen wesentliches Merkmal darin besteht, daß die zweite Achse außermittig zum Wischerblatt nahe dessen dem abgewinkelten Wischerarmende und der Haupt-Fahrtwindanströmung zugewandter Längskante verläuft und daß die andere Längskante des Wischerblattes mittels einer Andruckfederanordnung, die zwischen Wischerarmende und Wischerblatt angeordnet ist, an die Scheibe angedrückt ist. Hierdurch wird erreicht, daß das Wischerblatt an der der Haupt-Fahrtwindanströmung zugewandten Längskante mit maximaler Kraft angedrückt wird, während die andere Längskante mit einer zwar ausreichenden, aber deutlich geringeren Kraft angedrückt wird, so daß sich in Verbindung mit den bei der Anströmung auftretenden Kräften eine gleichmäßige Anlage des Wischerblattes insgesamt an der Scheibe ergibt.

Eine weitere Ausgestaltung der Einrichtung nach dem Oberbegriff des Patentanspruches 20 sieht vor, daß in den Fluidkanal Fluidkanal ein Mischabschnitt eingeschaltet ist, der eine düsenartige Verengung aufweist, in welche wenigstens ein Zuführkanal von einem Lösungsmittel-Vorratsbehälter kommend einmündet. Hiermit wird erreicht, daß bei einer ausreichend starken Strömung innerhalb des Fluidkanal an der Verengung ein derartiger Unterdruck entsteht, daß das Lösungsmittel ohne weitere Fördereinrichtungen aus seinem Vorratsbehälter in den Fluidkanal eingeleitet werden kann. Um die Einleitung von Lösungsmitteln in den Fluidkanal erst ab einem bestimmten Grenzwert des Unterdrucks wirksam werden zu lassen, kann in den Zuführkanal ein federbelastetes Rückschlagventil eingesetzt sein.

Weiter ist für die Einrichtung vorgesehen, daß in den Fluidkanal in Strömungsrichtung gesehen vor und/oder hinter der düsenartigen Verengung (je) ein elektrisch betreibbares Heizelement angeordnet ist. Durch diese Gestaltung wird die Möglichkeit geschaffen, eine Erwärmung des Fluids vor der Zugabe des Lösungsmittels oder auch nach der Zugabe des Lösungsmittels oder sowohl vor als auch nach der Zugabe des Lösungsmittels vorzunehmen, wobei die Auswahl zwischen den einzelnen Möglichkeiten von dem jeweiligen Funktionszustand bzw. der gerade gewünschten Funktionsweise der Einrichtung abhängt.

Zur Regulierung und Steuerung der in den Fluidkanal gelangenden Fluidmenge ist vorgesehen, daß dem Mischabschnitt ein fernbetätigt verstellbares sowie absperrbares Drosselorgan für die Fluidleitung vorgeschaltet ist. Das Drosselorgan kann in einer einfachen Ausführung in mehreren Stufen verstellbar sein; in einer aufwendigeren Gestaltung kann es auch ein stufenlos verstellbares Organ sein. Die Verstellung erfolgt vorzugsweise elektromagnetisch oder elektromotorisch.

Um die Wartung der Einrichtung möglichst einfach zu machen, ist schließlich noch vorgesehen, daß der Lösungsmittel-Vorratsbehälter Form einer nachfüllbaren und/oder auswechselbaren Patrone an den Mischabschnitt abgeflanscht ist.

Im folgenden wird ein Ausführungsbeispiel der Einrichtung anhand einer Zeichnung erläutert. Die Figuren der Zeichnung zeigen im einzelnen:
- Figur 1: einen Scheibenwischer als Teil der Scheibenwisch- und -reinigungseinrichtung, in einer ausschnittsweisen, teilweise weggebrochenen Darstellung, in Aufsicht,
- Figur 2: den Scheibenwischer aus Figur 1 im Querschnitt durch den Wischerarm,
- Figur 3: einen in eine als Teil der Einrichtung dienende Fluidleitung eingeschaltetem Mischabschnitt im Längsschnitt und
- Figur 4: ein in die Fluidleitung eingeschaltetes Drosselorgan, ebenfalls im Querschnitt.

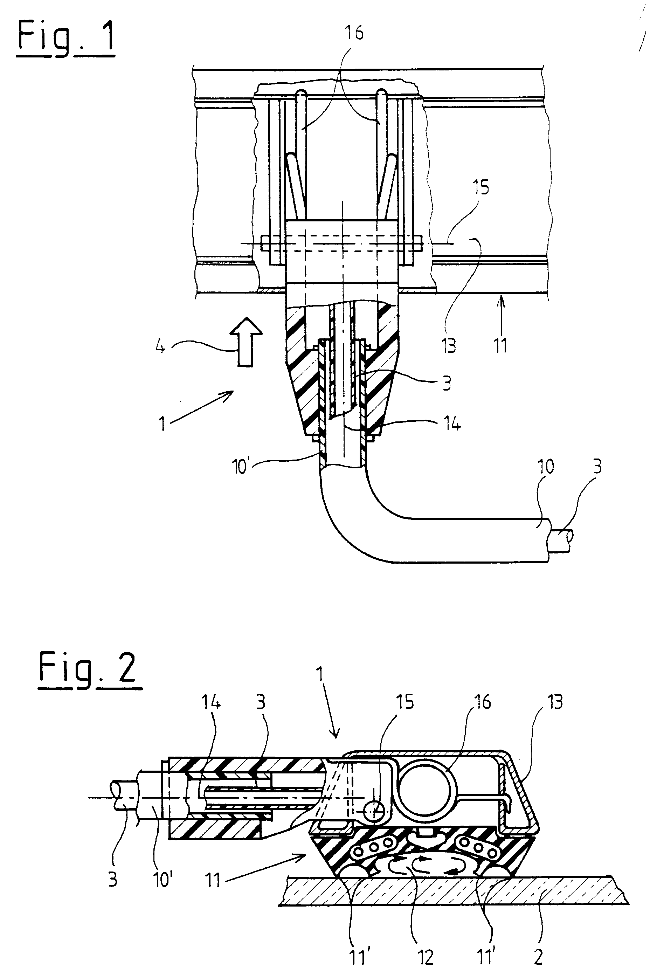

Wie die Figur 1 der Zeichnung zeigt, besitzt der hier dargestellte Scheibenwischer 1 einen Wischerarm 10, der in seinem Endbereich 10' um etwa 90° abgewinkelt ist. Das andere, hier nicht dargestellte Ende des Wischerarmes 10 ist in bekannter Art und Weise mit einem Scheibenwischerantrieb verbunden, wobei der Wischerarm 10 im wesentlichen parallel oder unter einem flachen Winkel zu der zu reinigenden Scheibe liegt. Durch den Wischerarm 10 verläuft eine Fluidleitung 3, durch welche flüssige, gasförmige oder gemischt zusammengesetzte Medien zu einen Wischerblatt 11 geführt werden können. Das Wischerblatt 11 ist mit dem Wischerarm 10 gelenkig verbunden, wobei zwei Bewegungsachsen vorhanden sind, nämlich als erste die Achse 14, welche in Richtung des abgewinkelten Endes 10' des Wischerarmes 10 verläuft, und als zweite die Achse 15, die parallel zur Längsrichtung des Wischerblattes verläuft. Wesentlich ist dabei, daß die Achse 15 außermittig zum Wischerblatt 11 angeordnet ist und zwar nahe der Längskante des Wischerblattes 11, welche dem Wischerarm 10 und der Haupt-Fahrtwindanströmungsrichtung 4 zugewandt ist. Die dem Wischerarm 10 und der Haupt-Fahrtwindanströmungsrichtung 4 abgewandte Längskante des Wischerblattes 11 wird durch eine Andruckfederanordnung 16 an die zu reinigende Scheibe angedrückt, so daß eine sichere Auflage des Wischerblattes 11 auch bei hohen Fahrgeschwindigkeiten des Fahrzeuges gewährleistet ist. Nach außen bzw. oben hin, d. h. an der von der Scheibe abgewandten Seite, ist das Wischerblatt 11 durch ein Abdeck- und Tragprofil 13 abgedeckt.

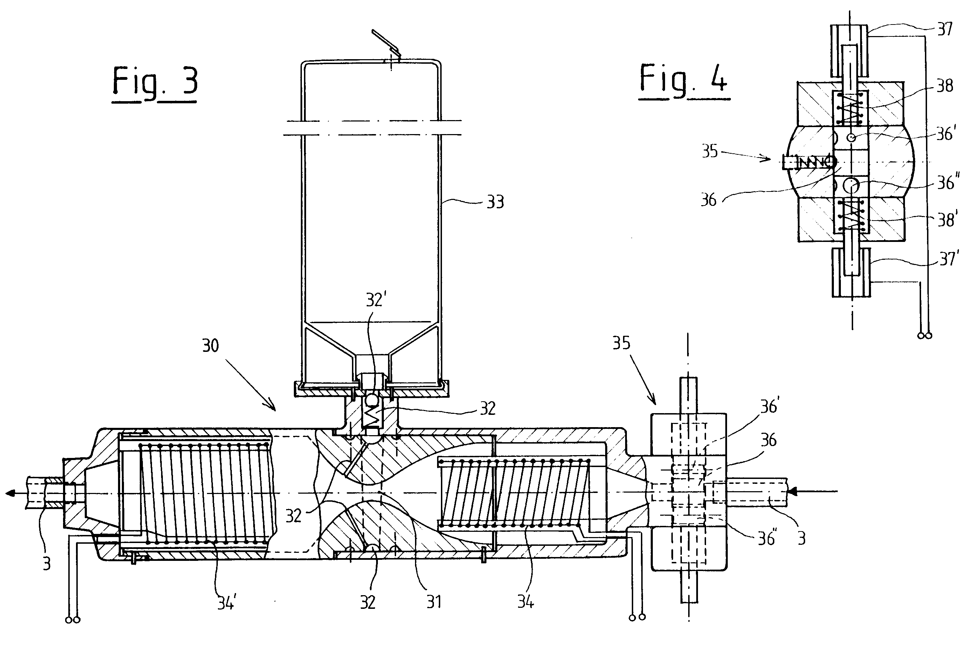

Aus dem in Figur 2 gezeigten Schnitt ist insbesondere das Zusammenwirken des Endes 10' des Wischerarmes 10, des Wischerblattes 11 und der Andruckfederanordnung 16 ersichtlich. Am linken Rand der Figur 2 ist wieder die Fluidleitung 3 sichtbar, die durch das Innere des Endes 10' des Scheibenwischers 1 in das Innere des Wischerblattes 11 führt. Die erste Bewegungsachse zwischen dem Wischerblatt 11 und dem abgewinkelten Ende 10' des Wischerarmes 10 bildet die Achse 14, die hier in der Zeichnungsebene koaxial zum Ende 10' des Wischerarmes 10 verläuft. Die zweite Achse 15 verläuft hier senkrecht zur Zeichnungsebene parallel zu der hier linken, d.h. dem Wischerarm 10 bzw. dessen Ende 10' zugewandten Längskante des Wischerblattes 11. Den oberen Teil des Wischerblattes 11 bildet wieder das Abdeck- und Tragprofil 13. In dessen Innerem ist die Andruckfederanordnung 16 untergebracht, wobei die Federanordnung 16 mit ihrem einen Ende mit dem Endbereich 10' des Wischerarmes 10 verbunden ist und mit ihrem anderen Ende eine nach unten hin zur Scheibe 2 gerichtete Andruckkraft auf die in der Figur 2 rechte Längsseite ausübt, um einen gleichmäßigen Andruck des Scheibenwischerblattes 11 an die Scheibe 2, insbesondere bei hohen Fahrzeuggeschwindigkeiten zu gewährleisten.

Weiterhin sind unterhalb des Abdeck- und Tragprofils 13 insgesamt vier Wischlippen 11' vorgesehen, die Teil eines gemeinsamen Elastomerkörpers sind. Zwischen den beiden inneren Wischlippen 11' ist ein Hohlraum 12 gebildet, in welchen die durch den Wischerarm 10 verlaufende Fluidleitung 3 einmündet.

In Figur 3 der Zeichnung ist ein Ausführungsbeispiel für einen in die Fluidleitung 3 eingeschalteten Mischabschnitt 30 dargestellt, der dazu dient, ein Lösungsmittel aus einem Vorratsbehälter 33 in einen durch die Fluidleitung 3 geführten Fluidstrom, z.B. Druckluftstrom, zu leiten.

Bei der in Figur 3 vorliegenden Strömungsrichtung des Fluids von rechts nach links gelangt das Fluid, z.B. Druckluft auf einem Druckluftbehälter oder Kompressor durch den ersten Teilabschnitt der Fluidleitung 3 zunächst zu einem Drosselorgan 35, welches in die Fluidleitung 3 eingeschaltet ist und daß hier ein Dreistellungsventil ist, das einen Steuerkolben 36 besitzt, der drei Stellungen einnehmen kann. In der hier gezeigten Mittelstellung ist Fluidleitung 3 durch das Drosselorgan 35 gänzlich verschlossen; wird der Steuerkolben 36 nach unten verschoben, gelangt eine erste Bohrung 36' mit relativ geringem Querschnitt in Flucht mit der Fluidleitung 3, wodurch ein Durchlaß für eine geringe Menge eines Fluids geschaffen wird, während bei Verschiebung des Steuerkolbens 36 in seine obere Position eine zweite Bohrung 36'' mit einem großen Querschnitt in Flucht mit der Fluidleitung 3 gelangt und so eine große Fluidmenge durch das Drosselorgan gelangen kann. In Strömungsrichtung von rechts nach links anschließend folgt ein innerhalb des Mischabschnittes 30 angeordnetes erstes Heizelement 34, das elektrisch betreibbar ist und das aus einem Tragkörper mit einer darauf angeordneten Heizdrahtwendel besteht. Hieran anschließend folgt wiederum in Strömungsrichtung gesehen eine düsenartige Verengung 31, die dazu dient, den Fluidstrom sehr stark zu beschleunigen und so einen niedrigen Druck in diesem Bereich zu erzeugen. Dieser niedrige Druck wird dazu ausgenutzt, aus dem Vorratsbehälter 33, der oberhalb des Mischabschnittes 30 an diesen angeflanscht ist, ein Lösungsmittel in den Fluidstrom zu fördern. Hierzu ist der Vorratsbehälter 33 über ein Rückschlagventil 32' und eine Zuführkanalanordnung 32 mit der Fluidleitung 3 im Bereich ihrer Verengung 31 im Mischabschnit 30 verbunden. Bei einer ausreichend schnellen Fluidströmung innerhalb der Verengung 31 ergibt sich ein derart niedriger Druck, daß das Rückschlagventil 32' gegen die Kraft seiner Vorbelastungsfeder in die Offnungsstellung gelangt und so den Weg für das Lösungsmittel aus dem Vorratsbehälter 33 durch die Zuführkanalanordnung 32 in den Fluidstrom freigibt. An die Verengung 31 schließt sich dann noch ein weiteres Heizelement 34' an, das ebenfalls elektrisch betreibbar ist und wieder aus einem Tragkörper mit einer darauf aufgewickelten Heizdrahtwendel besteht. Danach vermindert sich dann wieder der Querschnitt für den Fluidstrom, der dann schließlich seinen weiteren Weg durch den weiteren Abschnitt der Fluidleitung 3 nimmt, welcher zu dem anhand der Figuren 1 und 2 erläuterten Scheibenwischer 1 führt.

Figur 4 schließlich zeigt das Drosselorgan 35 im Querschnitt senkrecht zu der Schnittrichtung der Figur 3, wobei hier besonders deutlich die Gestaltung des Steuerkolbens 36 mit seinen beiben Bohrungen 36' und 36'' sichtbar wird. Wie aus Figur 4 weiter ersichtlich ist, ist der Steuerkolben 36 mittels zweier Elektromagnete 37 und 37' in seine beiden Durchlaßstellungen bringbar, während er seine Absperrstellung bei abgeschalteten Elektromagneten 37 und 37' infolge einer auf ihn aufgeübten Kraft der beiden Federn 38 und 38' einnimmt. Damit ist sichergestellt, daß bei stromlosem Zustand des Elektromagneten 37 und 37' eine sichere Absperrung der Fluidleitung 3 erfolgt.

## Patentansprüche

1. Verfahren zum Betreiben einer Scheibenwisch- und -reinigungseinrichtung für ein Fahrzeug, wobei die Einrichtung wenigstens einen motorisch antreibbaren Scheibenwischer (1) mit einem Scheibenwischerblatt (11) mit mindestens zwei nebeneinanderliegenden, mit der Scheibe (2) einen Hohlraum (12) einschließenden Wischlippen (11') umfaßt, wobei durch im Scheibenwischer (1) bzw. im Wischerblatt (11) vorgesehene Kanäle ein Fluid in den Hohlraum (12) einleitbar ist, und wobei bei Anlaufen des Scheibenwischers (1) die Wischlippen (11') von der Scheibe (2) abgehoben werden können,
**dadurch gekennzeichnet**,
daß das Abheben der Wischlippen (11') von der Scheibe (2) für eine vorgebbare Zeit oder vorgebbare Zahl von Wischerüberläufen mittels Erzeugung eines Luftkisseneffektes durch Zuführung des Fluids mit ausreichend hohem Druck und in ausreichender Menge erfolgt und daß ein zumindest teilweise aus einem Scheibenverschmutzungen lösenden oder anlösenden Lösungsmittel bestehendes Fluid verwendet wird.

2. Verfahren nach Anspruch 1, dadurch gekennzeichnet, daß das Fluid ein Luft-Lösungsmittel-Gemisch ist und daß das Lösungsmittel in teils flüssigem, teils gasförmigem Zustand in den Hohlraum (12) eingeleitet wird.

3. Verfahren nach wenigstens einem der Ansprüche 1 und 2, dadurch gekennzeichnet, daß das Lösungsmittel als Flüssigkeit in einem im Fahrzeug angeordneten Vorratsbehälter (33) vorgehalten und bei Bedarf in eine zum Hohlraum (12) führende Fluidleitung (3) dosiert eingeleitet wird.

4. Verfahren nach wenigstens einem der Ansprüche 1 bis 3, dadurch gekennzeichnet, daß in die zum Hohlraum (12) führende Fluidleitung (3) bei Bedarf Druckluft aus einem Luftvorratsbehälter und/oder Kompressor dosiert eingeleitet wird.

5. Verfahren nach wenigstens einem der Ansprüche 1 bis 4, dadurch gekennzeichnet, daß das Lösungsmittel mittels eines in einem Mischabschnitt (30) der Fluidleitung (3) durch Düsenwirkung erzeugten Unterdrucks aus dem Vorratsbehälter (33) in den die Fluidleitung (3) durchströmenden Luftstrom eingeführt und darin vernebelt wird.

6. Verfahren nach wenigstens einem der Ansprüche 1 bis 5, dadurch gekennzeichnet, daß das durch die Fluidleitung (3) strömende Fluid geregelt erwärmt wird.

7. Verfahren nach wenigstens einem der Ansprüche 1 bis 6, dadurch gekennzeichnet, daß als Lösungsmittel Ethanol verwendet wird.

8. Verfahren nach Anspruch 1, dadurch gekennzeichnet, daß in dem Hohlraum (12) nach der Anlaufphase des Scheibenwischers (1) ein Unterdruck erzeugt wird.

9. Verfahren nach Anspruch 8, dadurch gekennzeichnet, daß der Unterdruck in Abhängigkeit von der Fahrgeschwindigkeit des Fahrzeuges geregelt wird.

10. Verfahren nach wenigstens einem der Ansprüche 8 und 9, dadurch gekennzeichnet, daß erst bei Überschreiten eines Fahrgeschwindigkeits-Grenzwertes der Hohlraum (12) unter Unterdruck gesetzt wird.

11. Verfahren nach Anspruch 1, dadurch gekennzeichnet, daß bei Unterschreiten eines Außentemperatur-Grenzwertes der Scheibenwischer (1) und/oder das Scheibenwischerblatt (11) mittels eines durch darin vorgesehene Kanäle und/oder Spalträume geleiteten erwärmten Fluids auf eine über der Außentemperatur, insbesondere über 0°C liegende Temperatur erwärmt wird.

12. Verfahren nach wenigstens einem der Ansprüche 1 bis 11, dadurch gekennzeichnet, daß zur Erzeugung des Luftkisseneffektes das Fluid mit einem Druck zwischen 1 und 2 bar und zur Erwärmung des Scheibenwischers (1) bzw. Scheibenwischerblattes (11) mit einem Druck zwischen 0,4 und 0,6 bar zugeführt wird.

13. Verfahren nach Anspruch 12, dadurch gekennzeichnet, daß durch eine vorbelastete Ventilanordnung innerhalb des Scheibenwischers (1) das Fluid abhängig vom anstehenden Druck selbsttätig entweder zur Erzeugung des Luftkisseneffektes in den Hohlraum (12) über der Scheibe (2) oder zur Scheibenwischer-Anwärmung in die dafür vorgesehenen Kanäle und Spalträume geleitet wird.

14. Verfahren nach dem Oberbegriff des Anspruches 1, dadurch gekennzeichnet, daß die Leistungsaufnahme eines den Scheibenwischer (1) antreibenden Antriebsmotors erfaßt wird und daß bei einem infolge eines Trockenlaufens des Scheibenwischers (1) eintretenden Überschreiten eines Leistungsaufnahme-Grenzwertes der Scheibenwischer (1) in seine Ruhelage bewegt und der Antriebsmotor abgeschaltet wird.

15. Verfahren nach dem Oberbegriff des Anspruches 1, dadurch gekennzeichnet, daß bei Bedarf innerhalb des Scheibenwischers (1) eine in den Hohlraum (12) gerichtete, unter einem flachen, unterhalb des Winkels der Totalreflexion liegenden Winkel auf die Scheibe (2) treffende Mikrowellenstrahlung erzeugt wird.

16. Verfahren nach wenigstens einem der Ansprüche 1 bis 15, dadurch gekennzeichnet, daß die für das Betreiben der Scheibenwisch- und -reinigungseinrichtung relevanten Parameter, wie Stellung des Scheibenwischers (1) und/oder Fluiddruck und/oder Fluidtemperatur und/oder Außentemperatur und/oder Antriebsmotor-Leistungsaufnahme, über geeignete Sensoren mittels einer elektronischen Steuereinheit erfaßt und überwacht werden und daß nach Maßgabe dieser Parameter sowie nach Maßgabe gespeicherter Daten- und Programminformationen und nach Eingabe eines Startimpulses die Funktionen der Scheibenwisch- und -reinigungseinrichtung einzeln oder in Kombination miteinander durch die Steuereinheit ausgelöst und überwacht werden.

17. Verfahren nach wenigstens einem der Ansprüche 1 bis 16, dadurch gekennzeichnet, daß der Startimpuls manuell durch einen Fahrzeugführer eingegeben wird und daß alle nachfolgenden Fuktionen selbsttätig ablaufen.

18. Verfahren nach wenigstens einem der Ansprüche 1 bis 17, dadurch gekennzeichnet, daß als Steuereinheit ein eigener, unabhängiger Mikroprozessor oder ein im Fahrzeug ohnehin vorhandener Prozessor verwendet wird.

19. Verfahren nach wenigstens einem der Ansprüche 1 bis 18, dadurch gekennzeichnet, daß an den Wischlippen (11') und der vom Scheibenwischer (1) überstrichenen Scheibenoberfläche adhäsiv anhaftendes Wasser durch Zuführung eines wasserbindenden, flüchtigen Fluids, insbesondere Ethanol, in letzteres eingebunden und zusammen mit diesem beschleunigt verdunstet wird.

20. Scheibenwisch- und -reinigungseinrichtung zur Durchführung des Verfahrens nach wenigstens einem der Ansprüche 1 bis 19, wobei der Scheibenwischer (1) einen rohrförmigen, um seine Längsache drehbar gelagerten und durch eine Torsionsfeder vorbelasteten, in seinem Endbereich (10') abgewinkelten, in einer zur Scheibe (2) parallelen oder flach geneigten Ebene liegenden und darin verschwenkbaren Wischerarm (10) und ein in zwei Achsen (14, 15) gelenkig mit letzterem verbundenes, auf der Scheibe (2) aufliegendes Wischerblatt (11) mit mindestens zwei nebeneinanderliegenden, mit der Scheibe (2) einen Hohlraum (12) einschließenden Wischlippen (11') umfaßt und wobei die erste Achse (14) in Richtung des abgewinkelten Endes (10') des Wischerarmes (10) und die zweite Achse (15) in Längsrichtung des Wischerarmes (10) verläuft,
dadurch gekennzeichnet, daß die zweite Achse (15) außermittig zum Wischerblatt (11) nahe dessen dem abgewinkelten Wischerarmende (10') und der Haupt-Fahrtwindanströmung zugewandter Längskante verläuft und daß die andere Längskante des Wischerblattes (11) mittels einer Andruckfederanordnung (16), die zwischen Wischerarmende (10') und Wischerblatt (11) angeordnet ist, an die Scheibe (2) angedrückt ist.

21. Einrichtung nach dem Oberbegriff des Anspruches 20, dadurch gekennzeichnet, daß in die Fluidleitung (3) ein Mischabschnitt (30) eingeschaltet ist, der eine düsenartige Verengung aufweist, in welche wenigstens ein Zuführkanal (32) von einem Lösungsmittel-Vorratsbehälter (33) kommend einmündet.

22. Einrichtung nach Anspruch 21, dadurch gekennzeichnet, daß in den Zuführkanal (32) ein federbelastetes Rückschlagventil (32') eingesetzt ist.

23. Einrichtung nach wenigstens einem der Ansprüche 21 und 22, dadurch gekennzeichnet, daß in die Fluidleitung (3) in Strömungsrichtung gesehen vor und/oder hinter der düsenartigen Verengung (31) (je) ein elektrisch betreibbares Heizelement (34, 34') angeordnet ist.

24. Einrichtung nach wenigstens einem der Ansprüche 21 bis 23, dadurch gekennzeichnet, daß dem Mischabschnitt (30) ein fernbetätigt verstellbares sowie absperrbares Drosselorgan (35) für die Fluidleitung (3) vorgeschaltet ist.

25. Einrichtung nach wenigstens einem der Ansprüche 21 bis 24, dadurch gekennzeichnet, daß der Lösungsmittel-Vorratsbehälter (33) in Form einer nachfüllbaren und/oder auswechselbaren Patrone an den Mischabschnitt (30) angeflanscht ist.

## Claims

1. Procedure for operating a window wiping and cleaning arrangement for a vehicle with the arrangement comprising at least one windshield wiper (1) rotatable by a motor with a windshield profile rubber (11) having at least two wiper lips (11') arranged side-by-side and enclosing a cavity (12) with the windshield (2) wherein a fluid may be guided into the cavity (12) through passages provided in the windshield wiper (1) or the windshield profile rubber (11), respectively, and wherein the wiper lips (11') may be lifted from the windshield (2) when starting the windshield wiper (1),
**characterized in**
that the lifting of the wiper lips (11') from the windshield (1) is accomplished by generating an air cushion effect by supplying the fluid with a sufficient pressure and in a sufficient volume for a presettable time or a presettable number of overruns of the wiper.

2. Procedure according to claim 1, characterized in that the fluid is an air/solvent mixture, and that the solvent is guided into the cavity (12) partly in the fluid state, and partly in the gaseous state.

3. Procedure according to at least one of the claims 1 and 2, characterized in that the solvent as a liquid is stored in a tank (33) arranged in the vehicle and on request is metered into a fluid line (3) leading into the cavity (12).

4. Procedure according to at least one of the claims 1 to 3, characterized in that pressurized air out of an air container and/or compressor on request is metered into the fluid line (3) leading into the cavity (12).

5. Procedure according to at least one of the claims 1 to 4, characterized in that the solvent is led out of the tank (33) into the air stream wherein it is sprayed by means of a vacuum generated by a jet effect in a mixing section (30) of the fluid line (3).

6. Procedure according to at least one of the claims 1 to 5, characterized in that the fluid streaming through the fluid line (3) is heated in a controlled manner.

7. Procedure according to at least one of the claims 1 to 6, characterized in that the solvent is ethanol.

8. Procedure according to claim 1, characterized in that a vacuum is generated in the cavity (12) after the start-up phase of the windshield wiper (1).

9. Procedure according to claim 8, characterized in that the vacuum is controlled depending on the driving speed of the vehicle.

10. Procedure according to at least one of the claims 8 and 9, characterized in that only when exceeding a threshold limit of the driving speed the cavity (12) is put under vakuum.

11. Procedure according to claim 1, characterized in that when falling short of a threshold limit of the outer temperature the windshield wiper (1) and/or the windshield profile rubber (11) is heated to a temperature above the outer temperature, in particular above 0°C by means of a heated fluid guided through passages and/or slits in the windshield wiper (1) and/or the windshield profile rubber (11).

12. Procedure according to at least one of the claims 1 to 11, characterized in that for generating the air cushion effect the fluid is supplied with a pressure between 1 and 2 bar, and for heating the windshield wiper (1) or the windshield profile rubber (11), respectively, with a pressure between 0,4 and 0,6 bar.

13. Procedure according to claim 12, characterized in that by a biased valve arrangement within the windshield wiper (1) the fluid is guided automatically and independent of the pressure provided either into the cavity (12) above the windshield (2) for generating the air cushion effect or through the passages and slits provided for the windshield heating.

14. Procedure according to the preamble of claim 1, characterized in that the power consumption of a driving motor driving the windshield wiper (1) is detected, and that the windshield wiper (1) is moved into its neutral position when exceeding a threshold of the power consumption caused by a dry run of the windshield wiper (1), and that the driving motor is switched off.

15. Procedure according to the preamble of claim 1, characterized in that on request a micro-wave-radiation is generated within the windshield wiper (1) with the radiation directed into the cavity (12) onto the windshield (2) in a flat angle selected below the angle of total reflection.

16. Procedure according to at least one of the claims 1 to 15, characterized in that the parameters relevant for the operating of the window wiping and cleaning arrangement, like position of the windshield wiper (1) and/or fluid pressure and/or fluid temperature and/or outer temperature and/or driving motor power consumption are detected and monitored by suitable sensors by means of an electronic control unit, and that corresponding with these parameters and with data and program information stored and after input of a starting pulse the functions of the window wiping and cleaning arrangement separately or in combination with each other are started and monitored by the control unit.

17. Procedure according to at least one of the claims 1 to 16, characterized in that the starting pulse is given manually by the driver, and that all subsequent functions proceed automatically.

18. Procedure according to at least one of the claims 1 to 17, characterized in that a dedicated, self-standing micro-processor or a processor present in the vehicle are used as the control unit.

19. Procedure according to at least one of the claims 1 to 18, characterized in that water adhesively clinging to the wiper lips (11') and the windshield surface scanned by the windshield wiper (1) is dissolved by supplying a water-binding, volatile fluid, in particular ethanol, and is evaporated in a rapid rate together with the fluid.

20. Window wiping and cleaning arrangement for carrying out the procedure according to at least one of the claims 1 to 19, wherein the windshield wiper (1) comprises a pipe-shaped wiper arm (10) rotatably supported about the longitudinal axis thereof, and biased by a torsional spring, angled in the end area (10') thereof, situated in a plane in parallel with the windshield (2) or flatly inclined, and pivotible in the plane, and a windshield profile rubber (11) articulatedly connected with the wiper arm (10) in two axis (14, 15), and resting at the windshield (2), with the windshield profile rubber (11) comprising at least two wiper lips (11') arranged side-by-side, and enclosing a cavity (12) together with the windshield (2), with the first axis (14) extending in the direction of the angled end (10') of the wiper arm (10), and the second axis (15) extending in longitudinal direction of the wiper arm (10),
**characterized in**
that the second axis (15) extends off center in relation to the windshield profile rubbef (11) in close proximity of the longitudinal edge thereof facing the angled wiper arm end (10') and the main driving wind stream, and that the other longitudinal edge of the windshield profile rubber (11) is pressed onto the windshield (2) by means of a pressure spring arrangement (16) arranged between the wiper arm end (10') and the windshield profile rubber (11).

21. Arrangement according to the preamble of claim 20, characterized in that a mixing section (30) is arranged in the fluid line (3), with the mixing section (30) comprising a jet-like narrowing in which at least one feeding passage (32) opens, with the feeding passage (32) being guided from a solvent tank (33).

22. Arrangement according to claim 21, characterized in that a spring loaded check walve (32') is mounted in the feeding passage (32).

23. Arrangement according to at least one of the claims 21 and 22, characterized in that an electric heating element (34, 34') is arranged in the fluid line (3) in front of and/or behind the jet-like narrowing (31) as seen in streaming direction.

24. Arrangement according to at least one of the claims 21 to 23, characterized in that a throttle member (35) for the fluid line (3) adjustable by remote control and closable is arranged in front of the mixing section (30).

25. Arrangement according to at least one of the claims 21 to 24, characterized in that the solvent tank (33) in form of a rechargeable and/or replaceable cartridge is secured at the mixing section (30) by a flange.

## Revendications

1. Procédé pour exploiter un dispositif d'essuyage et de nettoyage de vitres pour un véhicule, le dispositif comprenant au moins un essuie-glace (1) susceptible d'être entraîné au moyen d'un moteur, présentant une raclette d'essuie-glace (11) présentant au moins deux lèvres d'essuyage (11') situées l'une à côté de l'autre et entourant, avec la vitre (2) un espace vide (12), un fluide étant susceptible d'être introduit dans l'espace vide à travers des canaux prévus dans l'essuie-glace (11), ou, respectivement la raclette d'essuie-glace (11) et dans lequel, lors de la mise en marche de l'essuieglace (1), les lèvres d' essuyage (11') peuvent être soulevées de la vitre (2), caractérisé en ce que le soulèvement des lèvres d'essuyage (11') de la vitre (2) pendant une durée susceptible d'être déterminée à l'avance ou pendant un nombre déterminable à l'avance de battements de l'essuie-glace est obtenu par création d'un effet de coussin d'air par refoulement du fluide à une pression suffisamment élevée et à un débit suffisant et en ce que on utilise un fluide composé au moins en partie d'un solvant susceptible de dissoudre ou de solubiliser les salissures de la vitre;

2. Procédé selon la revendication 1, caractérisé en ce que le fluide est un mélange d'air et de solvant et en ce que le solvant est introduit dans l'espace vide (12) à l'état partiellement liquide, partiellement gazeux.

3. Procédé selon au moins l'une des revendications 1 et 2, caractérisé en ce que le solvant est stocké sous forme liquide dans un récipient de stockage (33) disposé dans le véhicule et est de façon dosé en cas de besoin dans une conduite de fluide (3) conduisant à l'espace vide (12).

4. Procédé selon au moins une des revendications 1 à 3, caractérisé en ce que de l'air comprimé en provenance d'un réservoir d'air et/ou d'un compresseur est introduit en cas de besoin de façon dosée dans la conduite de fluide (3) conduisant à l'espace vide (12).

5. Procédé selon au moins l'une des revendications 1 à 4, caractérisé en ce que le solvant est introduit, à partir du récipient de stockage (33) dans le courant d'air traversant la conduite de fluide (3) où il est vaporisé, au moyen d'une dépression crée par un effet d'éjecteur dans un tronçon de mélange (30) de la conduite de fluide (3).

6. Procédé selon au moins l'une des revendications 1 à 5, caractérisé en ce que le fluide traversant la conduite de fluide (3) est réchauffé d'une façon réglée.

7. Procédé selon au moins une des revendications 1 à 6, réalisé en ce qu'on utilise en tant que solvant, de l'éthanol.

8. Procédé selon la revendication 1, caractérisé en ce qu'on crée, après la phase de démarrage de l'essuieglace (1) une dépression dans l'espace vide (12).

9. Procédé selon la revendication 8, caractérisé en ce que l'on règle la dépression en fonction de la vitesse de roulement du véhicule.

10. Procédé selon au moins l'une des revendications 8 et 9, caractérisé en ce qu'on met l'espace vide (12) en dépression uniquement en cas de dépassement d'une valeur limite de vitesse du véhicule.

11. Procédé selon la revendication 1, caractérisé en ce que, dans le cas où la température extérieure est inférieure à une valeur limite, on réchauffe l'essuie-glace (1) et/ou la raclette d'essuie-glace (11) au moyen d'un fluide passant par des canaux et/ou des intervalles qui y sont prévus, et qui est réchauffé à une température supérieure à la température extérieure, en particulier à une température supérieure à 0°C.

12. Procédé selon au moins l'une des revendications 1 à 11, caractérisé en ce que, afin de générer l'effet de coussin d'air, le fluide est amené à une pression comprise entre 1 et 2 bars et, pour réchauffer l'essuieglace (1), ou respectivement, la raclette d'essuie-glace (11), à une pression comprise entre 0,4 et 0,6 bar.

13. Procédé selon la revendication 12, caractérisé en ce que, en fonction de la pression du fluide, ce dernier est guidé automatiquement soit pour produire l'effet de coussin d'air dans l'espace vide (12) sur la vitre (2), soit pour le réchauffement de l'essuie-glace, dans les canaux et intervalles qui y sont prévus, au moyen d'un agencement à valve précontrainte à l'intérieur de l'essuie-glace (1).

14. Procédé selon le préambule de la revendication 1, caractérisé en ce qu'on capte la puissance absorbée par un moteur d'entraînement de l'essuie-glace (1) et en ce que en cas de dépassement d'une valeur limite d'absorption de puissance apparaissant par suite d'un fonctionnement à sec de l'essuie-glace (1), l'essuieglace (1) est placé en position de repos et, le moteur d'entraînement est débranché.

15. Procédé selon le préambule de la revendication 1, caractérisé en ce qu'en cas de besoin, on génère à l'intérieur de l'essuie-glace (1), un rayonnement microondes dirigé dans l'espace vide (12) et qui frappe la vitre (2) selon un faible angle d'incidence inférieur à l'angle de réflexion totale.

16. Procédé selon au moins l'une des revendications 1 à 15, caractérisé en ce que les paramètres nécessaires pour le fonctionnement du dispositif d'essuyage et de nettoyage de vitres tel que la position de l'essuie-glace (1) et/ou la pression du fluide et/ou la température du fluide et/ou la température extérieure et/ou la puissance appelée sur le moteur d'entraînement, sont captées et surveillées par des capteurs adéquats, au moyen d'une unité de commande électronique et en ce que, en fonction de ces paramètres ainsi qu'en fonction d'informations de données et de programmes mises en mémoire et après application d'une impulsion de démarrage, les fonctions du dispositif d'essuyage et de nettoyage de vitres sont déclenchées et contrôlées individuellement ou en combinaison l'une avec l'autre, par l'unité de commande.

17. Procédé selon au moins l'une des revendications 1 à 16, caractérisé en ce que l'impulsion de démarrage est fournie manuellement par un conducteur de véhicule et toutes les fonctions ultérieures se déroulent automatiquement.

18. Procédé selon au moins l'une des revendications 1 à 17, caractérisé en ce qu'on utilise en tant qu'unité de commande un microprocesseur dédié et indépendant ou un processeur qui est par ailleurs déjà présent dans le véhicule.

19. Procédé selon au moins l'une des revendications 1 à 18, caractérisé en ce que grâce à l'introduction d'un fluide volatil qui se combine à l'eau, en particulier d'éthanol, l'eau collée de façon adhésive à la surface de la vitre balayée par les lèvres d'essuyage (11') et par l'essuie-glace (1) est liée au fluide volatil pour être vaporisée de façon accélérée en même temps que ce dernier.

20. Dispositif d'essuyage et de nettoyage d'une vitre pour la réalisation du procédé selon au moins l'une des revendications 1 à 19, dans lequel l'essuie-glace (1) est composé d'un bras d'essuie-glace (10) de forme tubulaire, monté rotatif autour de son axe longitudinal et prècontraint au moyen d'un ressort de torsion, coudé dans sa zone d'extrémité (10'), disposé dans un plan parallèle ou légèrement incliné par rapport à la vitre (2) et susceptible de pivoter dans ce plan, et d'une raclette d'essuyage (11) reliée de façon pivotante à deux axes (14,15) avec ce dernier et qui s'appuie contre la vitre (2) en présentant au moins deux lèvres d'essuyage (11') disposées l'une à côté de l'autre et entourant, avec la vitre (2) un espace vide (12), le premier axe (14) étant disposé selon la direction de l'extrémité coudée (10') du bras d'essuyage (10) et le deuxième axe (15) étant disposé selon la direction longitudinale du bras d'essuyage (10), caractérisé en ce que le deuxième axe (15) est excentré par rapport à la raclette d'essuyage (11), plus proche de l'arête longitudinale trouvée vers l'extrémité coudée du bras d'essuie-glace (10') et vers l'écoulement aérodynamique principal au cours du roulement, et en ce que l'autre arête longitudinale de la raclette d'essuyage (11) est pressé contre la vitre (2) au moyen d'un agencement à ressort de pressage (16) disposé entre l'extrémité du bras d'essuie-glace (10') et la raclette d'essuyage (11).

21. Dispositif selon le préambule de la revendication 20, caractérisé en ce qu'un tronçon de mélange (30) présentant un rétrécissement en forme de venturi dans lequel débouche au moins un canal d'alimentation (32) d'un récipient de stockage de solvant (33), est interposé dans la conduite de fluide (3).

22. Dispositif selon la revendication 21, caractérisé en ce qu'un clapet anti-retour (32') sollicité élastiquement est interposé dans le canal d'alimentation (32).

23. Dispositif selon l'une des revendications 21 et 22, caractérisé en ce que dans la conduite de fluide (3) en amont et/ou en aval du rétrécissement en forme de venturi (31) dans le sens de l'écoulement, sont disposés un (ou plusieurs) éléments de chauffage alimentés électriquement (34, 34').

24. Dispositif selon au moins une des revendications 21 à 23, caractérisé en ce qu'avant la tronçon de mélange (30) un organe d'étranglement (35) télécommandé, réglable et susceptible d'être fermé, est monté sur la conduite de fluide (3).

25. Dispositif selon au moins une des revendications 21 à 24, caractérisé en ce que le récipient de stockage de solvant (33) est monté flasqué sur le tronçon de mélange (30) sous la forme d'une cartouche susceptible d'être remplie et/ou remplacée.
